# EUROPEAN PATENT APPLICATION

(11) **EP 4 657 298 A1**
(43) Date of publication of application: **03.12.2025**
(21) Application number: 25177056.6
(22) Date of filing: 16.05.2025
(51) Int. Cl.: G06F 21/62, H04L 9/40

(54) **SYSTEMS AND METHODS FOR ACCESS CONTROL**

(30) Priority: 28.05.2024 US 202463652554 P; 26.09.2024 US 202418898251
(71) Applicant: Palantir Technologies Inc., Denver, CO 80202 (US)
(72) Inventor: AGRAWAL, Akshay, Jersey City (US); ÖHRNER, Noah, London (GB); LOWE, Kevin, Denver (US); COOKE, Dylan, Hilton Head (US); MUSTIÈRE, Paul, London (GB); PEREIRA, Vinícius Guimarães, Denver (US); CHAN, Hubert, Belmont (US); VIEIRA COIMBRA, Felipe, London (GB); WICKHAM, Jack, London (GB)
(74) Representative: Sayer, Robert David

(57) **Abstract**

In some examples, systems and methods for checking data access are provided. For example, a method includes: receiving a checking request about a user, the checking request including a user identifier of the user and a resource indication of a resource; determining one or more components referenced by the resource; for each component of the one or more components referenced by the resource, determining permission information indicating whether the user access to at least a part of the one or more components; and determining permission information indicating whether the user is permitted to access the resource.

## Description

This application claims priority U.S. Provisional Application No. 63/652,554, filed May 28, 2024, and to U.S. Application No. 18/898,251, filed September 26, 2024.

### FIELD

Certain embodiments of the present disclosure relate to data security, such as managing or controlling data access. More particularly, some embodiments of the present disclosure relate to checking data access.

### BACKGROUND

Organizations often use computing systems and/or platforms to solve real-world problems. During the process, in some examples, the computing systems and/or platforms often generate, access, and/or manage large amount of data. In some embodiments, data from different data sources may have different data access requirements.

Hence, it is desirable to improve techniques for managing and checking data access.

### SUMMARY

Certain embodiments of the present disclosure relate to managing data access. More particularly, some embodiments of the present disclosure relate to checking data access.

At least some embodiments are directed to a method for checking data access. In certain embodiments, the method includes: receiving a checking request about a user, the checking request including a user identifier of the user and a resource indication of a resource; determining one or more components referenced by the resource; for each component of the one or more components referenced by the resource, generating a component inquiry for accessing a respective component by the user, the component inquiry including information related to the respective component and the user identifier; sending the component inquiry to a software service corresponding to the respective component; and receiving a permission response from the software service, the permission response indicating whether the user is permitted to access the respective component; and determining permission information indicating whether the user is permitted to access the resource, based on one or more permission responses received.

At least some embodiments are directed to a system for checking data access. In some embodiments, the system includes: one or more memories comprising instructions stored thereon; and one or more processors configured to execute the instructions and perform operations comprising: receiving a checking request about a user, the checking request including a user identifier of the user and a resource indication of a resource; determining one or more components referenced by the resource; for each component of the one or more components referenced by the resource, generating a component inquiry for accessing a respective component by the user, the component inquiry including information related to the respective component and the user identifier; sending the component inquiry to a software service corresponding to the respective component; and receiving a permission response from the software service, the permission response indicating whether the user is permitted to access the respective component; and determining permission information indicating whether the user is permitted to access the resource, based on one or more permission responses received.

At least some embodiments are directed to a non-transitory computer-readable storage medium having instructions for checking data access that, when executed by one or more processors, cause the one or more processors to perform operations comprising: receiving a checking request about a user, the checking request including a user identifier of the user and a resource indication of a resource; determining one or more components referenced by the resource; for each component of the one or more components referenced by the resource, generating a component inquiry for accessing a respective component by the user, the component inquiry including information related to the respective component and the user identifier; sending the component inquiry to a software service corresponding to the respective component; and receiving a permission response from the software service, the permission response indicating whether the user is permitted to access the respective component; and determining permission information indicating whether the user is permitted to access the resource, based on one or more permission responses received.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

Figure 1 is a simplified diagram showing a method for managing data access according to certain embodiments of the present disclosure.
Figure 2A is a simplified diagram showing a method for generating and/or updating an access checking software using an AI model according to certain embodiments of the present disclosure.
Figure 2B is a simplified diagram showing a method for generating an access explanation using an AI model according to certain embodiments of the present disclosure.
Figure 3 is an illustrative data-access management environment 300 according to certain embodiments of the present disclosure.
Figure 4 illustrates an example diagram of resource, components and access controls, according to certain embodiments of the present disclosure.
Figure 5A and Figure 5B are two example user interfaces illustrating representation of the access explanation and the permission information according to certain embodiments of the present disclosure.
Figure 6 is a simplified diagram showing a computing system for implementing a system for data-access management in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods often check data access by looking into individual resources. For example, for a software application (e.g., a dashboard application) accessing multiple resources across several data repositories, if a user is denied accessing the software application, an administrator needs to manually check access information in the multiple resources and the data repositories to identify and resolve the access issue. Additionally, conventional systems and methods are often lack of a way to manage complex security permissions and access controls efficiently and reliably.

Various embodiments of the present disclosure can achieve benefits and/or improvements by using a data-access management system (e.g., software module) to check and/or manage data access of a software system including various access control types (e.g., role-based access control, attribute-based access control, classification-based access control, etc.) and various resources (e.g., tens or hundreds of data resources). In certain embodiments, the data-access management system can greatly improve efficiency in checking access and providing explanation of access, for example, why a user has the access to a first resource, why a user does not have the access to a second resource. In some embodiments, the data-access management system can use an artificial intelligence (AI) model (e.g., a language model (LM), a large language model (LLM), etc.) to generate code for managing access controls, checking access controls, and/or generating explanations of access controls.

According to some embodiments, in software platforms, managing access controls to different data can be a complex and time-consuming task. For example, users and administrators need to ensure that only permitted personnel can access sensitive data. In certain embodiments, standard access authorization controls can include role-based access control (RBAC) and attribute-based access control (ABAC). In some embodiments, the role-based access control refers to an approach to restricting data, resource, and/or system access to permitted users by roles, where different roles have different privileges and responsibilities. In certain embodiments, a role (e.g., an owner, an editor, a viewer, a discoverer, etc.) is essentially a collection of permissions, and users receive permissions through the roles to which they are assigned, or through roles inherited through the role hierarchy. For example, a discoverer can only see names and metadata of datasets (e.g., files, data tables, data structures, etc.), a viewer can view the content of datasets but cannot edit the files and cannot manage the datasets' security, an editor can edit the datasets and/or modify sharing property, and an owner can edit the datasets and has full control over the datasets' security. In some embodiments, a dataset can be from a single data source and/or stored at a single data repository. In certain embodiments, a dataset can be from a plurality of data sources and/or stored at a plurality of data repositories.

In some embodiments, the attribute-based access control refers to an approach to restricting data, resource, and/or system access to permitted users determined by evaluating attributes associated with the subject, object, requested operations, environment attributes, and/or the like. In certain embodiments, the classification-based access control refers to an approach to restricting data, resource and/or system access to permitted users (e.g., groups, users, etc.) by evaluating data classifications. In certain embodiments, there are no industry standard techniques and methods for reasoning across all such permutation of access controls for a given resource. In some embodiments, manually checking authorization can be inefficient and error-prone leading to legibility issues and operational delays in troubleshooting and extending access to resources. Therefore, in certain embodiments, an efficient and reliable way to check permissions for accessing data is needed.

According to certain embodiments, the present disclosure includes methods and systems for efficiently checking permissions for accessing different data and features within a software platform. In some embodiments, a data-access management system includes a permission management module (e.g., a central permission management module, an access management module) that stores and manages all the permissions and roles associated with different users and groups. In certain embodiments, the module is integrated with the authentication and authorization mechanisms of the platform, which ensures that only authenticated and permitted users can access the system.

According to some embodiments, the permission management module checks permissions for accessing different data and features within the platform. Instead of manually checking each permission for each user, in certain embodiments, the module uses a set of predefined rules and algorithms to determine the access rights of each user. In some embodiments, the rules take into account various factors such as user roles, group memberships, and data sensitivity levels, and generate a comprehensive and accurate set of permissions for each user. In certain embodiments, resource dependencies are traversed and resolved such that accurate access permission is generated (e.g., via displaying the policy).

According to certain embodiments, a resource (e.g., a data resource, a software application, etc.) requires access (e.g., references) to a plurality of other resources (e.g., data resources, software applications), also referred to as components. In some examples, a resource includes a marking. In some examples, the marking corresponds to at least one selected from a group consisting of a sensitivity level, a training level, a user type, and an organization type. For example, a user may be unable to access resources with a particular marking unless the user has a sensitivity clearance that satisfies the sensitivity level of the particular marking. As an example, a user may be unable to access resources with a particular marking unless the user has certain training that satisfies the training level of the particular marking. As an example, a user may be unable to access resources with a particular marking unless the user has a certain title that satisfies the user type of the particular marking. As an example, a user may be unable to access resources with a particular marking unless the user is part of a certain organization that satisfies the organization type of the particular marking.

According to certain embodiments, the data-access management system also includes a user interface that allows users and administrators to view relevant permissions and roles within the platform. In some embodiments, the interface provides a clear and concise summary of the user's access rights, which helps them to understand their privileges and limitations within the data-access management system.

According to some embodiments, the present disclosure provides a more efficient and reliable way of checking permissions for accessing data and features within a software platform. In certain embodiments, the data-access management system automates the process of managing permissions and reduces the risk of human error, leading to improved security permissions and access controls.

According to certain embodiments, enterprises employ a wide range of access control systems, and often at the same time for different needs. In some embodiments, this usually means that different industry standards are used in combination and/or permutation with each other. In some examples, the data-access management system can include role-based access control (RBAC) and attribute-based access control (ABAC), and in certain examples, the system employs classification-based access controls as well, such that the possible permutations are increased.

According to some embodiments, the data-access management system can address resources protected from various access controls and/or access control types at the same time and creating new resources with these permutations of access controls. However, in certain embodiments, it becomes really hard to answer one or more of following questions: 1) who has access to this resource and/or to what parts of this resource?; 2) why do they have that access?; and/or the like. In some examples, what is especially tricky is to answer this question for another user than the user or the creator. In certain examples, an administrator could want to ensure that a particular department does not have access to certain data for compliance reasons. In some examples, this means that someone would need to reason with their own permissions, the other users' permissions and then the resource's protections.

According to certain embodiments, the data-access management system, also referred to as an access checker (e.g., a processor initiating an access checking, a processor conducting an access checking), can enable one or more of: 1) mapping and resolution of access to resources when multiple access controls (e.g., multiple access control types) apply at once; 2) users to check their own level and nature of access (e.g., roles) to a resource; 3) resources could be permissioned with any permutation of multiple access controls; 4) resources could be simple/singular resources (permissions apply to the whole resources) or a combinatorial/compound resource (different parts/components referenced by the resource are protected differently); 5) a checker to check someone else's level and nature of access to a resource; 6) the checker could have more permissions than the target user; 7) the checker could have less permissions than the target user; 8) in the case where the checker has less permissions (e.g., accessible to less resources, lower security levels, etc.) than the checkee, at least some embodiments are context-aware and do not surface things that the checker is not allowed to discover / see; 9) the checker gets a clear answer without ever giving away confidential information; and 10) leverages UI to communicate a simplified outcome and allows for progressive probing and progressive discovery.

According to certain embodiments, the data-access management system can include one or more computing models (e.g., one or more artificial intelligence (AI) models), also referred to as resource access models, for generating and/or modifying one or more data-access parameters (e.g., configurations). In some embodiments, a model, also referred to as a computing model, includes a model to process data. A model includes, for example, an artificial intelligence (AI) model, a machine learning (ML) model, a deep learning (DL) model, an image processing model, an algorithm, a rule, other computing models, and/or a combination thereof. In certain embodiments, a resource access AI model can generate data access parameters for members, groups, users, organizations, projects, markings, and/or the like. In some embodiments, organizations can include one or more groups.

In certain examples, a resource access AI model can include training data (e.g., a part of training corpus) embedded in the model. In some embodiments, the resource access AI model includes a generative AI (artificial intelligence) model with training data embedded in the model. In certain embodiments, a generative AI model is a type of AI model that can be used to produce various type of content, such as text, images, videos, audio, 3D (three-dimensional) data, 3D models, and/or the like. In some embodiments, a language model or a large language model (LLM), which is a type of generative AI models, includes content and training data embedded in the model.

According to some embodiments, the resource access AI model (e.g., a language model, an LLM, etc.) can be trained using selected corpus (e.g., historical access controls, historical access parameters, historical resource information, historical attributes for one or more accesses, historical roles, historical classifications, historical software code, etc.) and the resource access AI model is configured to generate software code (e.g., software code in python, etc.) for managing and/or checking access. In some embodiments, the resource access AI model includes a language model ("LM") that may include an algorithm, rule, model, and/or other programmatic instructions that can predict the probability of a sequence of words or expressions (e.g., software code). In some embodiments, a language model may, given a starting text string (e.g., one or more words), predict the next word or expression in the sequence. In certain embodiments, a language model may calculate the probability of different word combinations and/or software code based on the patterns learned during training (based on a set of text data from books, articles, websites, audio files, software code, etc.).

In some embodiments, a language model may generate many combinations of one or more next words and/or expressions that are coherent and contextually relevant. In certain embodiments, a language model can be an advanced artificial intelligence algorithm that has been trained to understand, generate, and manipulate language (e.g., computing language expressions). In some embodiments, a language model can be useful for natural language processing, including receiving natural language prompts and providing natural language responses based on the text on which the model is trained. In certain embodiments, a language model may include an n-gram, exponential, positional, neural network, and/or other type of model. In some embodiments, a language model can be used to generate software code.

In certain embodiments, the resource access AI model includes a large language model (LLM), which was trained on a larger data set and has a larger number of parameters (e.g., billions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pretrained Transformer 3 (GPT-3) model, a GPT 3.5-turbo model, a Claude model, a command-xlang model, a bidirectional encoder representations from transformers (BERT) model, a pathways language model (PaLM) 2, and/or the like.

According to some embodiments, the data-access management system includes an access explanation computing model. In some embodiments, the access explanation computing model can be trained using selected corpus (e.g., historical access controls, historical access parameters, historical resource information, historical attributes for one or more accesses, historical roles, historical classifications, historical software code, etc.). In certain embodiments, the access explanation computing model (e.g., an access explanation AI model) includes a language model that is trained to generate an explanation based on information associated with one or more components referenced by a resource for a user and/or a group of users. In certain embodiments, the access explanation computing model includes a large language model that is trained to generate an explanation based on information associated with one or more components referenced by a resource for a user and/or a group of users.

In some examples, the access explanation model is configured to generate an explanation including an indication of access, also referred to as permission, being permitted by at least one selected from a group consisting of a role-based access control, an attribute-based access control, and a classification-based access control. In certain examples, the access explanation model is configured to generate an explanation including an indication of access being denied by at least one selected from a group consisting of a role-based access control, an attribute-based access control, and a classification-based access control.

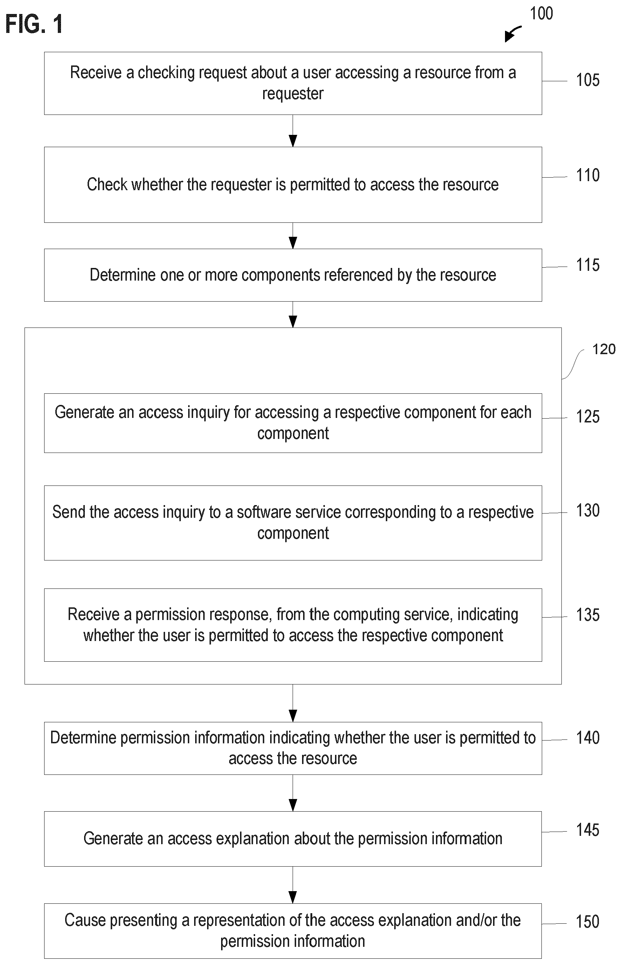

Figure 1 is a simplified diagram showing a method 100 for checking data access according to certain embodiments of the present disclosure. This diagram is merely an example. One of ordinary skill in the art would recognize many variations, alternatives, and modifications. The method 100 for checking data access includes processes 105, 110, 115, 120, 125, 130, 135, 140, 145, and 150. Although the above has been shown using a selected group of processes for the method 100 for checking data access, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 100 are performed by a system (e.g., the computing system 600). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

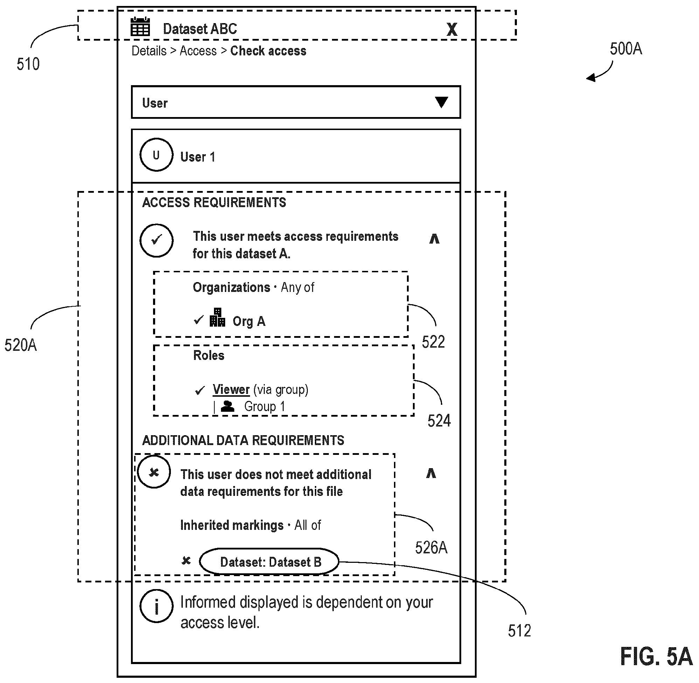

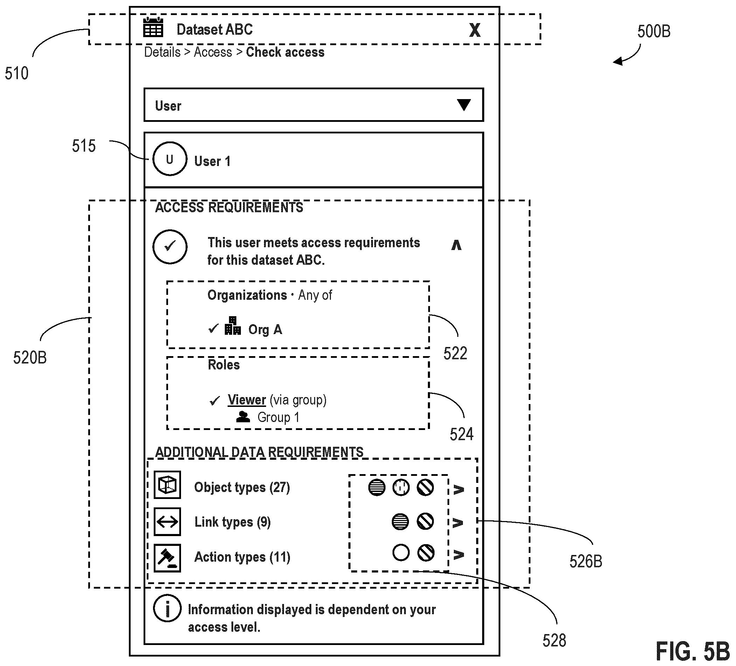

According to certain embodiments, at process 105, the system receives a checking request about a user accessing a resource from a requester. In some embodiments, the checking request includes a resource identifier of the resource. In certain embodiments, the checking request includes a user identifier of the user. In some examples, the requester is the user. In certain examples, the requester is not the user. In some examples, the requester is an administrator. In certain examples, the requester is associated with a requester identifier. For example, the checking request may be received via an example user interface as illustrated in Figure 5, or via a software interface from another software module and/or software systems.

According to some embodiments, the resource is a software resource that includes data and/or one or more software modules. In some examples, the resource includes a project (e.g., a software project), a software application (e.g., a dashboard), a file, a folder, a dataset, a data source, and/or the like. In certain embodiments, the resource references to one or more other resources, also referred to as components referenced by the resource. In some examples, the resource (e.g., a dashboard application) references a plurality of datasets and/or a plurality of data sources. In certain examples, the resource references a plurality of datasets and/or a plurality of data sources, each referred to as a component. In some embodiments, each component is associated with a software service for checking and/or managing access to the component. In certain embodiments, a software service refers to a software module that can run on a computing device.

According to certain embodiments, at process 110, the system checks whether the requester is permitted to access the resource. In some embodiments, the checking request further includes a requester identifier of a requester. In certain embodiments, in response that the requester is not permitted to access the resource, the system denies the checking request. In some embodiments, in response that the requester is permitted to access the resource, the system continues to process the checking request.

According to some embodiments, at process 115, the system determines one or more components referenced by the resource. In certain embodiments, the one or more components include a first component and a second component, where the second component is different from the first component. In some embodiments, the first component is associated with a first object (e.g., a software structure representing an object) and the second component is associated with a second object, where the second object is different from the first object. For example, the first object is an airplane object and the second object is a pilot object. In certain embodiments, the first component is governed by a first access control type and the second component is governed by a second access control type, where the second access control type is different from the first access control type. For example, the first access control type is a role-based access control and the second access control type is an attribute-based access control.

In some embodiments, the system can use an access group to manage resource accesses. In certain embodiments, a user is an access group. For example, a user identifier is a group identifier. In some embodiments, an access group includes one or more members, where each member can be a real user, a virtual user, an access group, and/or the like. In certain embodiments, the user is a member of an access group. In some embodiments, an access permission of the user is inherited from the access group. As an example, the first access control type is a role-based access control and the second access control type is an access control inherited from an access group. In certain embodiments, the system can use a marking to manage resource accesses. In some embodiments, the marking corresponds to at least one selected from a group consisting of a sensitivity level, a training level, a user type, and an organization type. For example, a user may be unable to access resources with a particular marking unless the user has a sensitivity clearance that satisfies the sensitivity level of the particular marking. As an example, a user may be unable to access resources with a particular marking unless the user has certain training that satisfies the training level of the particular marking. As an example, a user may be unable to access resources with a particular marking unless the user has a certain title that satisfies the user type of the particular marking. As an example, a user may be unable to access resources with a particular marking unless the user is part of a certain organization that satisfies the organization type of the particular marking.

In certain embodiments, the first component is associated with a first action type and the second component is associated with a second action type, where the second action type is different from the first action type. In some embodiments, an action refers to one or more processing logics applied to one or more objects including, for example, creating objects, changing objects, combining objects, linking objects, deleting objects, and/or the like. In certain embodiments, an action type is a data structure of an action, which creates or modifies one or more objects of one or more object types when the action occurs. In certain embodiments, an action can be represented by an instance of the action type, where the instance of the action type includes data associated with the action occurring and using the action type data structure. In some embodiments, an object type is a data structure representing a type of an object, where the data structure includes one or more object properties. In some examples, an object (e.g., plane A) is an instance of an object type (e.g., plane object type). In certain embodiments, a component is associated with a link type, where a link type is a schema definition between one or more object types. For example, a plane type and a flight type can have a link type for schedule flight and assigned plane. As an example, a link type for direct report can exist between a first employee type (e.g., manager) and a second employee type (e.g., members).

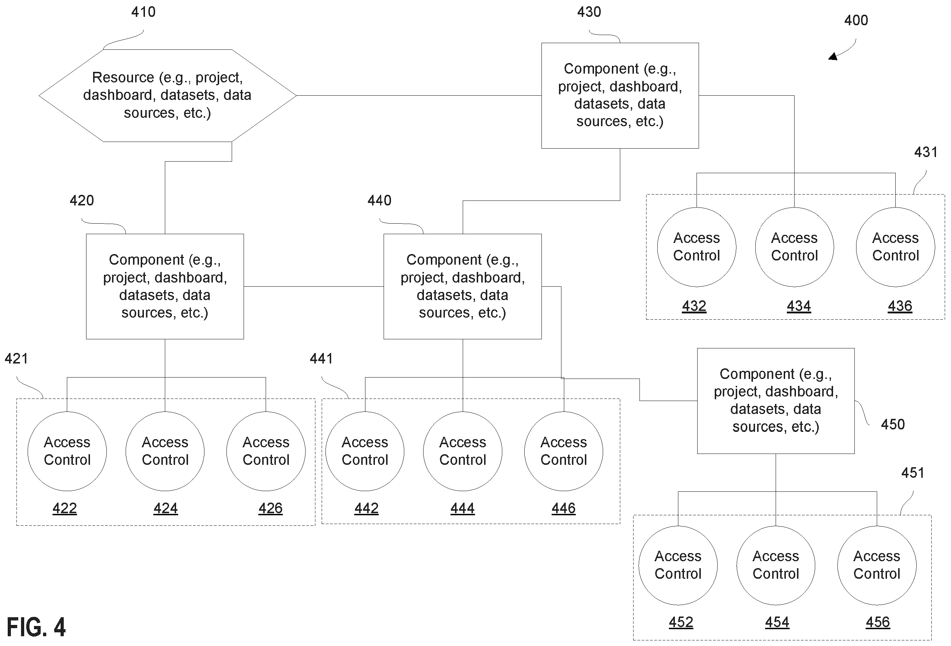

Figure 4 illustrates an example diagram 400 of resource, components and access controls, according to certain embodiments of the present disclosure. This diagram is merely an example. One of ordinary skill in the art would recognize many variations, alternatives, and modifications. In some embodiments, the resource 410 references to one or more nested components, where the nested components are resources. In this example, the resource 410 (e.g., project, dashboard, datasets, data sources, etc.) references two components, component 420 (e.g., project, dashboard, datasets, data sources, etc.) and component 430. Additionally, as an example, the component 430 further references to a component 440 (e.g., project, dashboard, datasets, data sources, etc.). Further, for example, the component 440 references to the component 420 and the component 450, such that the resource 410 includes a component hierarchy including one or more levels of components. In some embodiments, each of the components (e.g., component 420, component 430, component 440, component 450, etc.) can associate with one or more respective access controls, where the one or more access controls can have different access control types. In certain embodiments, an access control type includes a role-based access control, an attribute-based access control, a classification-based access control, a group-based access control (e.g., inheritable by members of an access group), organization requirements, marking requirements, and/or the like.

For example, the component 420 can associate with a first set of access controls 421(e.g., access control 422, access control 424, access control 426, etc.). As an example, the component 430 can associate with a second set of access controls 431 (e.g., access control 432, access control 434, access control 436, etc.). In some examples, the first set of access controls 421 has at least one access controls that is different from the set of access controls 431. For example, the component 440 can associate with a third set of access controls 441 (e.g., access control 442, access control 444, access control 446, etc.). As an example, the component 450 can associate with a fourth set of access controls 451 (e.g., access control 452, access control 454, access control 456, etc.). In certain embodiments, at least two sets of access controls are different from each other. In certain embodiments, at least two sets of access controls are different from each other in the access control types. For example, the set of access controls 441 includes a role-based access control and the set of access control 451 does not include a role-based access control. In some embodiments, at least two sets of access controls are same as each other.

As an example, the first set of access controls 421 includes a role-based access control 422, where the user has an editor role for the component 420. For example, the first set of access controls 422 includes an inherited group-based access control 424, where the user has a viewer role for the component 420. As an example, the first set of access controls 421 includes an marking-based access control 426, where the user cannot access the component 420 because of the sensitivity level of the component 420.

According to some embodiments, at process 120, the system determines a permission of the user for accessing each component of the one or more components. In certain embodiments, the system determines whether the user can access each component of the one or more components. In some embodiments, the one or more components include a first component and a second component. In certain embodiments, the system determines that the user has a first permission to access the first component and a second permission to access the second component. In some embodiments, the first permission is different from the second permission. In certain embodiments, the first permission is of a first role access and the second permission is of a second role access, where the second role access is different from the first role access. For example, the first permission is a viewer access and the second permission is an editor access. In some embodiments, the first permission is of a first access control type and the second permission is of a second access control type. As an example, the first permission is an editor access and the second permission is a permission inherited from an access group. For example, the first permission is an access determined by a marking for the first component and the second permission is a permission inherited from an access group. In certain embodiments, the first permission is associated with a first action type and the second permission is associated with a second action type. As an example, the first permission is a permission for a changing action for one or more first objects (e.g., an action to delay a flight, etc.) and the second permission is a permission for a linking action for one or more second objects (e.g., an action to link a flight to an airport, etc.).

According to certain embodiments, the process 120 includes processes 125, 130, and/or 135. In some embodiments, at process 125, the system generates a component inquiry for accessing a respective component by the user, where the component inquiry includes information related to the respective component, the user identifier, the requester identifier, an action to be taken for an object, and/or the like. In certain embodiments, at process 130, the system sends the component inquiry to a software service corresponding to the respective component. In some embodiments, at process 135, the system receives a permission response, from the software service, indicating whether the user is permitted to access the respective component.

According to some embodiments, at process 140, the system determines permission information (e.g., a specific access control) indicating whether the user is permitted to access the resource. In certain embodiments, the system determines whether the user is permitted to access the resource based on one or more permission responses received from one or more software services corresponding to the one or more components. In some examples, the system determines that the user is permitted to access the resource referencing the one or more components, where the user is permitted to access each component of the one or more components. In certain examples, the system determines that the user is not permitted to access the resource, if the user is not permitted to access at least one of the one or more components. In some examples, the system determines that the user is not permitted to access a component by evaluating a first permission response indicating that the user is not permitted to access the component via a first access control and a second permission response indicating that the user is permitted to access the component via a second access control. In certain examples, the system determines that the user is permitted to access a component by evaluating a first permission response indicating that the user is not permitted to access the component via a first access control and a second permission response indicating that the user is permitted to access the component via a second access control.

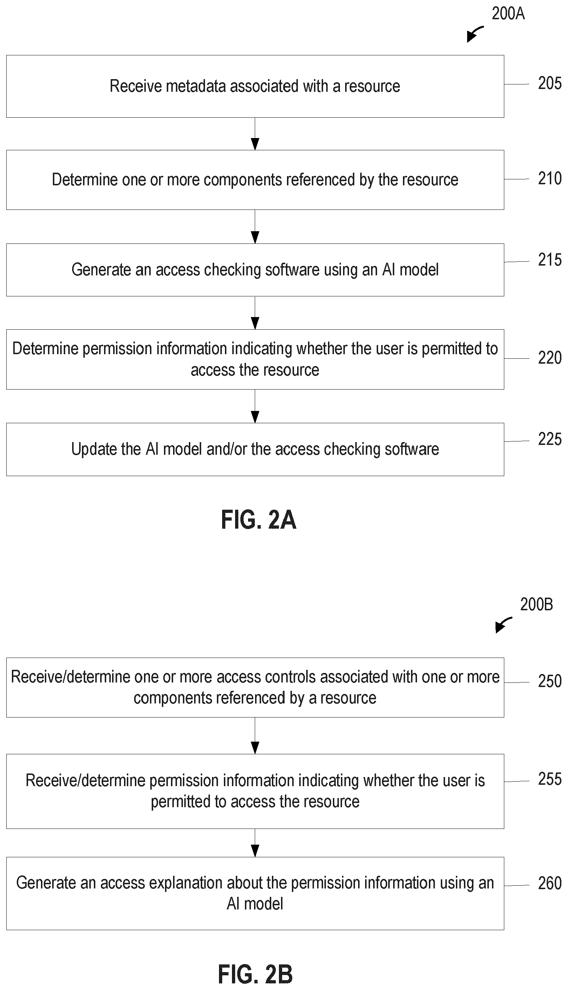

According to certain embodiments, at process 120 and/or at process 140, the system uses a resource access AI model (e.g., a language model, an LLM, etc.) to generate a software module for managing and/or checking access. In some embodiments, the resource access AI model can be trained using selected corpus (e.g., historical access controls, historical access parameters, historical resource information, historical attributes for one or more accesses, historical roles, historical classifications, historical software code, etc.) and the resource access AI model is configured to generate software code (e.g., software code in python, etc.) for managing and/or checking access. Further details of the resource access AI model can be found throughout the present disclosure, for example, as illustrated in Figure 2A.

According to certain embodiments, at process 145, the system generates an access explanation about the permission information indicating whether the user is permitted to access the resource. In some embodiments, the system generates the access explanation based on the one or more permission responses received. In certain embodiments, the access explanation includes an indication of whether the user can access the one or more components. In some embodiments, the access explanation includes an indication of why the user can or cannot access the one or more components.

In certain embodiments, the access explanation includes a first explanation indicating a first component of the one or more components is accessible and a second explanation indicating a second component of the one or more components is not accessible. In some embodiments, the first explanation includes an indication of access being permitted by at least one selected from a group consisting of a role-based access control, an attribute-based access control, and a classification-based access control. In certain embodiments, the second explanation includes an indication of access being denied by at least one selected from a group consisting of a role-based access control, an attribute-based access control, and a classification-based access control.

In certain embodiments, the system generates the access explanation about the permission information using a computing model, referred to as an access explanation computing model. In some embodiments, the access explanation computing model can be trained using selected corpus (e.g., historical access controls, historical access parameters, historical resource information, historical attributes for one or more accesses, historical roles, historical classifications, historical software code, etc.). In certain embodiments, the access explanation computing model (e.g., an access explanation AI model) includes a language model that is trained to generate an explanation based on information associated with one or more components referenced by a resource for a user and/or a group of users. In certain embodiments, the access explanation computing model includes a large language model that is trained to generate an explanation based on information associated with one or more components referenced by a resource for a user and/or a group of users. Additional details of using the access explanation AI model are described throughout the present disclosure, for example, as illustrated in Figure 2B.

According to some embodiments, the system determines that the requester is permitted to access a part of the resource, for example, a first subset of the one or more components referenced by the resource, where the requester is not permitted to access a second subset of the one or more components referenced by the resource. In certain embodiments, in response that the requester is permitted to access a part of the resource, the system generates the access explanation based on the one or more permission responses received and the part of the resource that the requester is permitted to access. In some examples, the access explanation includes indications representing the first subset of the one or more components. In certain examples, the access explanation does not include indications representing the second subset of the one or more components.

According to certain embodiments, at process 150, the system presents and/or causes presenting a representation of the access explanation and/or the permission information. In some embodiments, the access explanation includes one or more graphics (e.g., circles, arrows, etc.), patterns, and colors (e.g., red, green, etc.) to represent permission information. Figure 5A and Figure 5B are two example user interfaces illustrating representation of the access explanation and the permission information, according to certain embodiments of the present disclosure. Figures 5A and 5B are merely examples. One of ordinary skill in the art would recognize many variations, alternatives, and modifications. As illustrated in Figure 5A, the user interface 500A includes a first representation 520A of permission information and access explanation for a user 515 accessing a resource 510. In this example, the user 515 is permitted to access the resource 510 according to a first access control 522 (e.g., organization requirements, marking requirements) and a second access control 524 (e.g., group-based access control) including a specific role (e.g., viewer). Additionally, the user 515 does not meet additional data requirements as explained in 526A. For example, the user 515 does not have permission to access a resource 512 that is referenced by the resource 510.

As illustrated in Figure 5B, the user interface 500B includes a second representation 520B of permission information and access explanation for the user 515 accessing the resource 510. In this example, the additional data requirements are described in 526B including one or more visual indications 528 to represent permission information. For example, the visual indications 528 include various patterned dots, where a first pattern indicates access permitted and a second pattern indicates access unpermitted. As an example, the visual indications 528 include various colored dots, where a first color indicates access permitted and a second color indicates access unpermitted. In some embodiments, the system evaluates components via one or more object types, one or more action types, and one or more link types. In this example, the resource 510 references 27 components via object types, 9 components via link types, and 11 components via action types. Additionally, for example, the user interface 510B includes controls 529 to expand the explanation. As an example, the user 515 can access some components referenced by the resource 510 but not all components. In some embodiments, the user 515 can see the resource 510 and its metadata, but not its data.

Figure 2A is a simplified diagram showing a method 200A for generating and/or updating an access checking software using an AI model according to certain embodiments of the present disclosure. This diagram is merely an example. One of ordinary skill in the art would recognize many variations, alternatives, and modifications. The method 200A includes processes 205, 210, 215, 220, and 225. Although the above has been shown using a selected group of processes for the method 200A, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 200A are performed by a system (e.g., the computing system 600). In certain examples, some or all processes (e.g., steps) of the method 200A are performed by a computer and/or a processor directed by a code. For example, a computer includes a server computer and/or a client computer (e.g., a personal computer). In some examples, some or all processes (e.g., steps) of the method 200A are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, at process 205, the system receives metadata associated with a resource. In some embodiments, the metadata includes information of one or more components referenced by the resource. In certain embodiments, the component can be a software (e.g., a software module, a project, a software system), a dataset, a data object, an action, a link, a file, a folder, a data source, and/or the like. In some embodiments, the information of a component includes access controls and/or data requirements of the component.

According to some embodiments, at process 210, the system determines one or more components referenced by the resource. In certain embodiments, at process 215, the system generates an access checking software using an AI model, referred to as a resource access AI model. In some embodiments, the resource access AI model can be trained using selected corpus (e.g., historical access controls, historical access parameters, historical resource information, historical attributes for one or more accesses, historical roles, historical classifications, historical software code, etc.) and the resource access AI model is configured to generate software code (e.g., software code in python, etc.) for managing and/or checking access.

According to certain embodiments, at process 220, the system determines permission information indicating whether the user is permitted to access the resource using the access checking software. In some embodiments, at process 225, the system updates the AI model and/or the access checking software. In some examples, the system updates at least one parameter and/or weight of the AI model based on the permission information, information of the one or more components, and/or metadata associated with the resource. In certain examples, the system updates the access checking software based on the permission information, information of the one or more components, and/or metadata associated with the resource. In some examples, the system updates the access checking software using the AI model (e.g., the updated AI model) based on the permission information, information of the one or more components, and/or metadata associated with the resource.

Figure 2B is a simplified diagram showing a method 200B for generating an access explanation using an AI model according to certain embodiments of the present disclosure. This diagram is merely an example. One of ordinary skill in the art would recognize many variations, alternatives, and modifications. The method 200B includes processes 250, 255, and 260. Although the above has been shown using a selected group of processes for the method 200B, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 200B are performed by a system (e.g., the computing system 600). In certain examples, some or all processes (e.g., steps) of the method 200B are performed by a computer and/or a processor directed by a code. For example, a computer includes a server computer and/or a client computer (e.g., a personal computer). In some examples, some or all processes (e.g., steps) of the method 200B are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, at process 250, the system receives and/or determines one or more access controls associated with one or more components referenced by a resource. In some embodiments, at process 255, the system receives and/or determines permission information indicating whether the user is permitted to access the resource. In certain embodiments, the system receives and/or determines whether the user is permitted to access each component of the one or more components. In certain embodiments, the system receives and/or determines whether the user is permitted to access each component of the one or more components with corresponding action types.

In some embodiments, at process 260, the system generates an access explanation about the permission information using an AI model, also referred to as an access explanation AI model. In some embodiments, the access explanation AI model can be trained using selected corpus (e.g., historical access controls, historical access parameters, historical resource information, historical attributes for one or more accesses, historical roles, historical classifications, historical software code, etc.). In certain embodiments, the access explanation AI model includes a language model that is trained to generate an explanation based on information associated with one or more components referenced by a resource for a user and/or a group of users. In some embodiments, the access explanation AI model includes a large language model that is trained to generate an explanation based on information associated with one or more components referenced by a resource for a user and/or a group of users. In certain embodiments, the access explanation AI model includes a large language model that is trained to generate an explanation based on information associated with one or more components referenced by a resource for a user and/or a group of users.

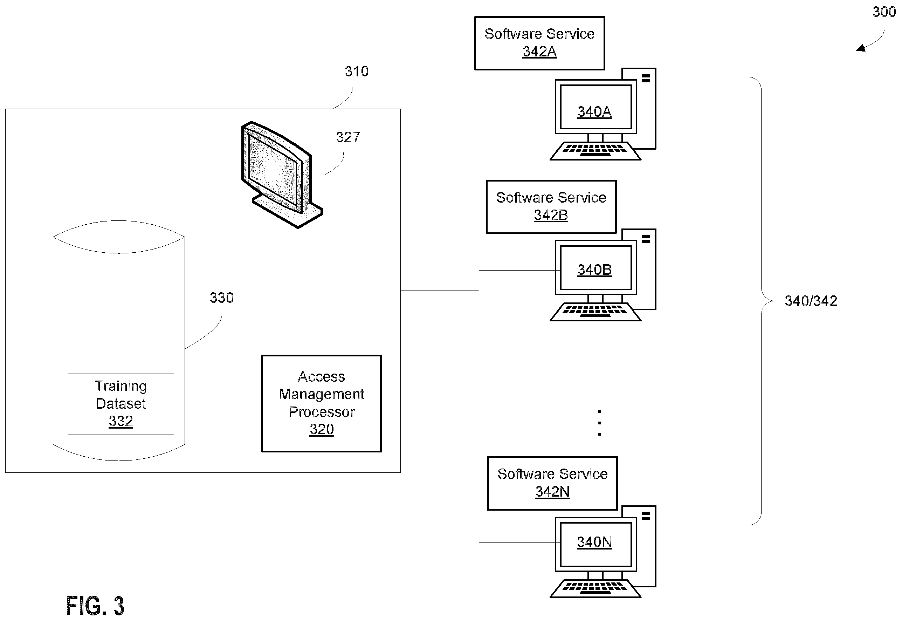

Figure 3 is an illustrative data-access management environment 300 according to certain embodiments of the present disclosure. In some embodiments, the data-access management environment 300 includes one or more access management systems (e.g., data-access management software modules) 310 and one or more computing devices 340 (e.g., computing device 340A, computing device 340B, ... computing device 340N, etc.). In certain embodiments, the access management system 310 includes one or more access management processors 320, one or more displays 327, and one or more data repositories 330.

In some embodiments, the one or more data repositories 330 include one or more training datasets 332, for example, for one or more resource access AI models and/or one or more access explanation AI models. In certain embodiments, the computing device 340 may include and/or access at least a part of the functionality of the access management system 310. In some embodiments, the computing device 340 includes one or more resources (e.g., components) and a corresponding software service 342 (e.g., software service 342A, software service 342B, ... software service 342N). Although the above has been shown using a selected group of components in the access management environment 300, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to certain embodiments, the access management system 310 (e.g., the access management processor 320, etc.) receives a checking request about a user accessing a resource from a requester. In some embodiments, the checking request includes a resource identifier of the resource. In certain embodiments, the checking request includes a user identifier of the user. In some examples, the requester is the user. In certain examples, the requester is not the user. In some examples, the requester is an administrator. In certain examples, the requester is associated with a requester identifier. For example, the checking request may be received via an example user interface as illustrated in Figure 5, or via a software interface from another software module and/or software systems.

According to some embodiments, the resource is a software resource that includes data and/or one or more software modules. In some examples, the resource includes a project (e.g., a software project), a software application (e.g., a dashboard), a file, a folder, a dataset, a data source, and/or the like. In certain embodiments, the resource references to one or more other resources, also referred to as components referenced by the resource. In some examples, the resource (e.g., a dashboard application) references a plurality of datasets and/or a plurality of data sources. In certain examples, the resource references a plurality of datasets and/or a plurality of data sources, each referred to as a component. In some embodiments, each component is associated with a software service for checking and/or managing access to the component. In certain embodiments, a software service refers to a software module that can run on a computing device.

According to certain embodiments, the access management system 310 (e.g., the access management processor 320, etc.) checks whether the requester is permitted to access the resource. In some embodiments, the checking request further includes a requester identifier of a requester. In certain embodiments, in response that the requester is not permitted to access the resource, the access management system 310 (e.g., the access management processor 320, etc.) denies the checking request. In some embodiments, in response that the requester is permitted to access the resource, the access management system 310 (e.g., the access management processor 320, etc.) continues to process the checking request.

According to some embodiments, the access management system 310 (e.g., the access management processor 320, etc.) determines one or more components referenced by the resource. In certain embodiments, the one or more components include a first component and a second component, where the second component is different from the first component. In some embodiments, the first component is associated with a first object (e.g., a software structure representing an object) and the second component is associated with a second object, where the second object is different from the first object. For example, the first object is an airplane object and the second object is a pilot object. In certain embodiments, the first component is governed by a first access control type and the second component is governed by a second access control type, where the second access control type is different from the first access control type. For example, the first access control type is a role-based access control and the second access control type is an attribute-based access control.

In some embodiments, the access management system 310 (e.g., the access management processor 320, etc.) can use an access group to manage resource accesses. In certain embodiments, a user is an access group. For example, a user identifier is a group identifier. In some embodiments, an access group includes one or more members, where each member can be a real user, a virtual user, an access group, and/or the like. In certain embodiments, the user is a member of an access group. In some embodiments, an access permission of the user is inherited from the access group. As an example, the first access control type is a role-based access control and the second access control type is an access control inherited from an access group. In certain embodiments, the access management system 310 (e.g., the access management processor 320, etc.) can use a marking to manage resource accesses. In some embodiments, the marking corresponds to at least one selected from a group consisting of a sensitivity level, a training level, a user type, and an organization type. For example, a user may be unable to access resources with a particular marking unless the user has a sensitivity clearance that satisfies the sensitivity level of the particular marking. As an example, a user may be unable to access resources with a particular marking unless the user has certain training that satisfies the training level of the particular marking. As an example, a user may be unable to access resources with a particular marking unless the user has a certain title that satisfies the user type of the particular marking. As an example, a user may be unable to access resources with a particular marking unless the user is part of a certain organization that satisfies the organization type of the particular marking.

In certain embodiments, the first component is associated with a first action type and the second component is associated with a second action type, where the second action type is different from the first action type. In some embodiments, an action refers to one or more processing logics applied to one or more objects including, for example, creating objects, changing objects, combining objects, linking objects, deleting objects, and/or the like. In certain embodiments, an action type is a data structure of an action, which creates or modifies one or more objects of one or more object types when the action occurs. In certain embodiments, an action can be represented by an instance of the action type, where the instance of the action type includes data associated with the action occurring and using the action type data structure. In some embodiments, an object type is a data structure representing a type of an object, where the data structure includes one or more object properties. In some examples, an object (e.g., plane A) is an instance of an object type (e.g., plane object type). In certain embodiments, a component is associated with a link type, where a link type is a schema definition between one or more object types. For example, a plane type and a flight type can have a link type for schedule flight and assigned plane. As an example, a link type for direct report can exist between a first employee type (e.g., manager) and a second employee type (e.g., members).

Figure 4 illustrates an example diagram 400 of resource, components and access controls, according to certain embodiments of the present disclosure. This diagram is merely an example. One of ordinary skill in the art would recognize many variations, alternatives, and modifications. In some embodiments, the resource 410 references to one or more nested components, where the nested components are resources. In this example, the resource 410 (e.g., project, dashboard, datasets, data sources, etc.) references two components, component 420 (e.g., project, dashboard, datasets, data sources, etc.) and component 430. Additionally, as an example, the component 430 further references to a component 440 (e.g., project, dashboard, datasets, data sources, etc.). Further, for example, the component 440 references to the component 420 and the component 450, such that the resource 410 includes a component hierarchy including one or more levels of components. In some embodiments, each of the components (e.g., component 420, component 430, component 440, component 450, etc.) can associate with one or more respective access controls, where the one or more access controls can have different access control types. In certain embodiments, an access control type includes a role-based access control, an attribute-based access control, a classification-based access control, a group-based access control (e.g., inheritable by members of an access group), organization requirements, marking requirements, and/or the like.

For example, the component 420 can associate with a first set of access controls 421(e.g., access control 422, access control 424, access control 426, etc.). As an example, the component 430 can associate with a second set of access controls 431 (e.g., access control 432, access control 434, access control 436, etc.). In some examples, the first set of access controls 421 has at least one access controls that is different from the set of access controls 431. For example, the component 440 can associate with a third set of access controls 441 (e.g., access control 442, access control 444, access control 446, etc.). As an example, the component 450 can associate with a fourth set of access controls 451 (e.g., access control 452, access control 454, access control 456, etc.). In certain embodiments, at least two sets of access controls are different from each other. In certain embodiments, at least two sets of access controls are different from each other in the access control types. For example, the set of access controls 441 includes a role-based access control and the set of access control 451 does not include a role-based access control. In some embodiments, at least two sets of access controls are same as each other.

As an example, the first set of access controls 421 includes a role-based access control 422, where the user has an editor role for the component 420. For example, the first set of access controls 422 includes an inherited group-based access control 424, where the user has a viewer role for the component 420. As an example, the first set of access controls 421 includes an marking-based access control 426, where the user cannot access the component 420 because of the sensitivity level of the component 420.

According to some embodiments, the access management system 310 (e.g., the access management processor 320, etc.) determines a permission of the user for accessing each component of the one or more components. In certain embodiments, the access management system 310 (e.g., the access management processor 320, etc.) determines whether the user can access each component of the one or more components. In some embodiments, the one or more components include a first component and a second component. In certain embodiments, the access management system 310 (e.g., the access management processor 320, etc.) determines that the user has a first permission to access the first component and a second permission to access the second component. In some embodiments, the first permission is different from the second permission. In certain embodiments, the first permission is of a first role access and the second permission is of a second role access, where the second role access is different from the first role access. For example, the first permission is a viewer access and the second permission is an editor access. In some embodiments, the first permission is of a first access control type and the second permission is of a second access control type. As an example, the first permission is an editor access and the second permission is a permission inherited from an access group. For example, the first permission is an access determined by a marking for the first component and the second permission is a permission inherited from an access group. In certain embodiments, the first permission is associated with a first action type and the second permission is associated with a second action type. As an example, the first permission is a permission for a changing action for one or more first objects (e.g., an action to delay a flight, etc.) and the second permission is a permission for a linking action for one or more second objects (e.g., an action to link a flight to an airport, etc.).

According to certain embodiments, the access management system 310 (e.g., the access management processor 320, etc.) generates a component inquiry for accessing a respective component by the user, where the component inquiry includes information related to the respective component, the user identifier, the requester identifier, an action to be taken for an object, and/or the like. In certain embodiments, the access management system 310 (e.g., the access management processor 320, etc.) sends the component inquiry to a software service 342 corresponding to the respective component. In some embodiments, the access management system 310 (e.g., the access management processor 320, etc.) receives a permission response, from the software service, indicating whether the user is permitted to access the respective component.

According to some embodiments, the access management system 310 (e.g., the access management processor 320, etc.) determines permission information (e.g., a specific access control) indicating whether the user is permitted to access the resource. In certain embodiments, the access management system 310 (e.g., the access management processor 320, etc.) determines whether the user is permitted to access the resource based on one or more permission responses received from one or more software services 342 corresponding to the one or more components. In some examples, the access management system 310 (e.g., the access management processor 320, etc.) determines that the user is permitted to access the resource referencing the one or more components, where the user is permitted to access each component of the one or more components. In certain examples, the access management system 310 (e.g., the access management processor 320, etc.) determines that the user is not permitted to access the resource, if the user is not permitted to access at least one of the one or more components. In some examples, the access management system 310 (e.g., the access management processor 320, etc.) determines that the user is not permitted to access a component by evaluating a first permission response indicating that the user is not permitted to access the component via a first access control and a second permission response indicating that the user is permitted to access the component via a second access control. In certain examples, the access management system 310 (e.g., the access management processor 320, etc.) determines that the user is permitted to access a component by evaluating a first permission response indicating that the user is not permitted to access the component via a first access control and a second permission response indicating that the user is permitted to access the component via a second access control.

According to certain embodiments, the access management system 310 (e.g., the access management processor 320, etc.) uses a resource access AI model (e.g., a language model, an LLM, etc.) to generate a software module for managing and/or checking access. In some embodiments, the resource access AI model can be trained using selected corpus (e.g., historical access controls, historical access parameters, historical resource information, historical attributes for one or more accesses, historical roles, historical classifications, historical software code, etc.) and the resource access AI model is configured to generate software code (e.g., software code in python, etc.) for managing and/or checking access. Further details of the resource access AI model can be found throughout the present disclosure, for example, as illustrated in Figure 2A.

According to certain embodiments, the access management system 310 (e.g., the access management processor 320, etc.) generates an access explanation about the permission information indicating whether the user is permitted to access the resource. In some embodiments, the access management system 310 (e.g., the access management processor 320, etc.) generates the access explanation based on the one or more permission responses received. In certain embodiments, the access explanation includes an indication of whether the user can access the one or more components. In some embodiments, the access explanation includes an indication of why the user can or cannot access the one or more components.

In certain embodiments, the access explanation includes a first explanation indicating a first component of the one or more components is accessible and a second explanation indicating a second component of the one or more components is not accessible. In some embodiments, the first explanation includes an indication of access being permitted by at least one selected from a group consisting of a role-based access control, an attribute-based access control, and a classification-based access control. In certain embodiments, the second explanation includes an indication of access being denied by at least one selected from a group consisting of a role-based access control, an attribute-based access control, and a classification-based access control.

In certain embodiments, the access management system 310 (e.g., the access management processor 320, etc.) generates the access explanation about the permission information using a computing model, referred to as an access explanation computing model. In some embodiments, the access explanation computing model can be trained using selected corpus (e.g., historical access controls, historical access parameters, historical resource information, historical attributes for one or more accesses, historical roles, historical classifications, historical software code, etc.). In certain embodiments, the access explanation computing model (e.g., an access explanation AI model) includes a language model that is trained to generate an explanation based on information associated with one or more components referenced by a resource for a user and/or a group of users. In certain embodiments, the access explanation computing model includes a large language model that is trained to generate an explanation based on information associated with one or more components referenced by a resource for a user and/or a group of users. Additional details of using the access explanation AI model are described throughout the present disclosure, for example, as illustrated in Figure 2B.

According to some embodiments, the access management system 310 (e.g., the access management processor 320, etc.) determines that the requester is permitted to access a part of the resource, for example, a first subset of the one or more components referenced by the resource, where the requester is not permitted to access a second subset of the one or more components referenced by the resource. In certain embodiments, in response that the requester is permitted to access a part of the resource, the access management system 310 (e.g., the access management processor 320, etc.) generates the access explanation based on the one or more permission responses received and the part of the resource that the requester is permitted to access. In some examples, the access explanation includes indications representing the first subset of the one or more components. In certain examples, the access explanation does not include indications representing the second subset of the one or more components.

According to certain embodiments, the access management system 310 (e.g., the access management processor 320, etc.) causes presenting a representation of the access explanation and/or the permission information, for example, on the display 327 and/or one or more displays associated with one or more computing devices 340. In some embodiments, the access explanation includes one or more graphics (e.g., circles, arrows, etc.), patterns, and colors (e.g., red, green, etc.) to represent permission information. Figure 5A and Figure 5B are two example user interfaces illustrating representation of the access explanation and the permission information, according to certain embodiments of the present disclosure. Figures 5A and 5B are merely examples. One of ordinary skill in the art would recognize many variations, alternatives, and modifications. As illustrated in Figure 5A, the user interface 500A includes a first representation 520A of permission information and access explanation for a user 515 accessing a resource 510. In this example, the user 515 is permitted to access the resource 510 according to a first access control 522 (e.g., organization requirements, marking requirements) and a second access control 524 (e.g., group-based access control) including a specific role (e.g., viewer). Additionally, the user 515 does not meet additional data requirements as explained in 526A. For example, the user 515 does not have permission to access a resource 512 that is referenced by the resource 510.

As illustrated in Figure 5B, the user interface 500B includes a second representation 520B of permission information and access explanation for the user 515 accessing the resource 510. In this example, the additional data requirements are described in 526B including one or more visual indications 528 to represent permission information. For example, the visual indications 528 include various patterned dots, where a first pattern indicates access permitted and a second pattern indicates access unpermitted. As an example, the visual indications 528 include various colored dots, where a first color indicates access permitted and a second color indicates access unpermitted. In some embodiments, the access management system 310 (e.g., the access management processor 320, etc.) evaluates components via one or more object types, one or more action types, and one or more link types. In this example, the resource 510 references 27 components via object types, 9 components via link types, and 11 components via action types. Additionally, for example, the user interface 510B includes controls 529 to expand the explanation. As an example, the user 515 can access some components referenced by the resource 510 but not all components. In some embodiments, the user 515 can see the resource 510 and its metadata, but not its data.

In some embodiments, the one or more repositories 330 can include one or more training datasets 332, one or more resource access AI models, one or more parameters and weight values for the one or more resource access AI models, one or more access explanation AI models, data resource information, component information, resource information, access control information, and/or the like. The repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the access management environment 300 can execute software or firmware stored in non-transitory computer-readable medium to implement various processing steps. Various components and processors of the access management environment 300 can be implemented by one or more computing devices including, but not limited to, circuits, a computer, a cloud-based processing unit, a processor, a processing unit, a microprocessor, a mobile computing device, and/or a tablet computer. In some cases, various components referenced by the access management environment 300 (e.g., the one or more access management systems 310, the one or more access management processors 320, the one or more computing devices 340, the one or more software services 342 342, etc.) can be implemented on a shared computing device. Alternatively, a component of the operating environment 300 can be implemented on multiple computing devices. In some implementations, various modules and components referenced by the access management environment 300 can be implemented as software, hardware, firmware, or a combination thereof. In some cases, various components referenced by the access management environment 300 can be implemented in software or firmware executed by a computing device.

Various components referenced by access management environment 300 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

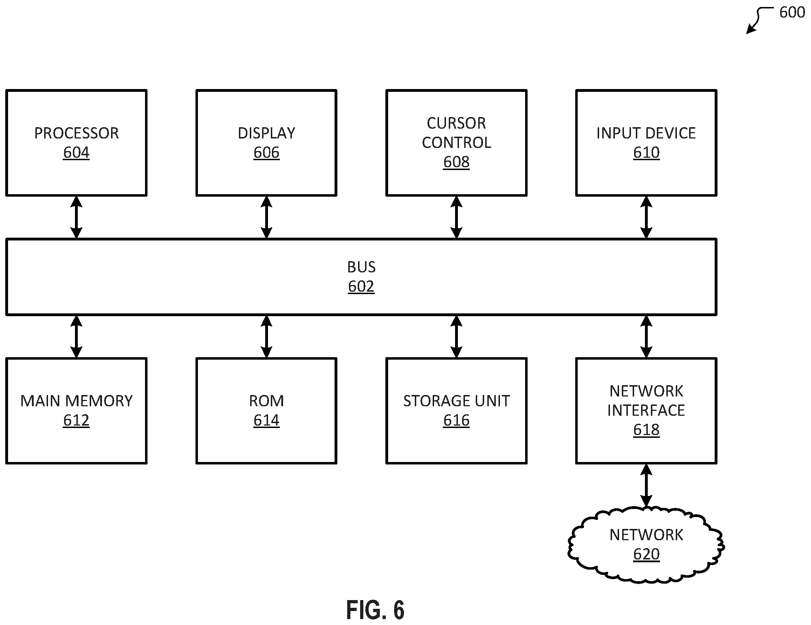

Figure 6 is a simplified diagram showing a computing system for implementing a system 600 for data-access management in accordance with at least one example set forth in the disclosure. This diagram is merely an example, which should not unduly limit the scope of the claims. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the methods (e.g., the method 100, the method 200A, the method 200B, etc.) and processes described in the present disclosure are performed by the computing system 600. In some examples, the bus 602 is coupled to the processor 604, the display 606, the cursor control component 608, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For example, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

According to certain embodiments, a method for checking data access, the method comprising: receiving a checking request about a user, the checking request including a user identifier of the user and a resource indication of a resource; determining one or more components referenced by the resource; for each component of the one or more components referenced by the resource, generating a component inquiry for accessing a respective component by the user, the component inquiry including information related to the respective component and the user identifier; sending the component inquiry to a software service corresponding to the respective component; and receiving a permission response from the software service, the permission response indicating whether the user is permitted to access the respective component; and determining permission information indicating whether the user is permitted to access the resource, based on one or more permission responses received; wherein the method is performed by one or more processors. For example, the method is implemented according to at least Figure 1, Figure 2A, Figure 2B, Figure 3, Figure 4, Figure 5A, and/or Figure 5B.

In some embodiments, the method further comprises: generating an access explanation of the permission information indicating whether the user is permitted to access the resource based on the one or more permission responses received; and causing presenting a representation of the access explanation. In certain embodiments, the access explanation includes a first explanation indicating a first component of the one or more components is accessible and a second explanation indicating a second component of the one or more components is not accessible. In some embodiments, the first explanation includes an indication of access being permitted by at least one selected from a group consisting of a role-based access control, an attribute-based access control, and a classification-based access control. In some embodiments, the second explanation includes an indication of access being denied by at least one selected from a group consisting of a role-based access control, an attribute-based access control, and a classification-based access control. In certain embodiments, the checking request further includes a requester identifier of a requester, wherein the method further comprises: checking whether the requester being permitted to access the resource; in response to the requester not being permitted to access the resource, denying the checking request.

In some embodiments, the checking request further includes a requester identifier of a requester; wherein the method further comprises checking whether the requester is permitted to access the resource; wherein the generating an access explanation of whether the user is permitted to access the resource includes: in response to the requester being permitted to access a part of the resource, generating the access explanation based on the one or more permission responses received and the part of the resource that the requester is permitted to access. In certain embodiments, the one or more components include a first component and a second component, wherein the second component is different from the first component. In some embodiments, the first component is associated with a first object and the second component is associated with a second object being different from the first object. In certain embodiments, the first component is governed by a first access control type and the second component is governed by a second access control type, wherein the second access control type is different from the first access control type. In some embodiments, the first component is associated with a first action type and the second component is associated with a second action type, wherein the second action type is different from the first action type.

According to some embodiments, a system for checking data access, the system comprising: one or more memories comprising instructions stored thereon; and one or more processors configured to execute the instructions and perform operations comprising: receiving a checking request about a user, the checking request including a user identifier of the user and a resource indication of a resource; determining one or more components referenced by the resource; for each component of the one or more components referenced by the resource, generating a component inquiry for accessing a respective component by the user, the component inquiry including information related to the respective component and the user identifier; sending the component inquiry to a software service corresponding to the respective component; and receiving a permission response from the software service, the permission response indicating whether the user is permitted to access the respective component; and determining permission information indicating whether the user is permitted to access the resource, based on one or more permission responses received. For example, the system is implemented according to at least Figure 1, Figure 2A, Figure 2B, Figure 3, Figure 4, Figure 5A, and/or Figure 5B.

In some embodiments, the operation further comprise: generating an access explanation of the permission information indicating whether the user is permitted to access the resource based on the one or more permission responses received; and causing presenting a representation of the access explanation. In certain embodiments, the access explanation includes a first explanation indicating a first component of the one or more components is accessible and a second explanation indicating a second component of the one or more components is not accessible. In some embodiments, the first explanation includes an indication of access being permitted by at least one selected from a group consisting of a role-based access control, an attribute-based access control, and a classification-based access control. In some embodiments, the second explanation includes an indication of access being denied by at least one selected from a group consisting of a role-based access control, an attribute-based access control, and a classification-based access control. In certain embodiments, the checking request further includes a requester identifier of a requester, wherein the operation further comprise: checking whether the requester is permitted to access the resource; in response to the requester not being permitted to access the resource, denying the checking request.

In some embodiments, the checking request further includes a requester identifier of a requester; wherein the operation further comprise checking whether the requester is permitted to access the resource; wherein the generating an access explanation of whether the user is permitted to access the resource includes: in response to the requester being permitted to access a part of the resource, generating the access explanation based on the one or more permission responses received and the part of the resource that the requester is permitted to access. In certain embodiments, the one or more components include a first component and a second component, wherein the second component is different from the first component. In some embodiments, the first component is associated with a first object and the second component is associated with a second object being different from the first object. In certain embodiments, the first component is governed by a first access control type and the second component is governed by a second access control type, wherein the second access control type is different from the first access control type. In some embodiments, the first component is associated with a first action type and the second component is associated with a second action type, wherein the second action type is different from the first action type.

According to certain embodiments, a non-transitory computer-readable storage medium having instructions for checking data access that, when executed by one or more processors, cause the one or more processors to perform operations comprising: receiving a checking request about a user, the checking request including a user identifier of the user and a resource indication of a resource; determining one or more components referenced by the resource; for each component of the one or more components referenced by the resource, generating a component inquiry for accessing a respective component by the user, the component inquiry including information related to the respective component and the user identifier; sending the component inquiry to a software service corresponding to the respective component; and receiving a permission response from the software service, the permission response indicating whether the user is permitted to access the respective component; and determining permission information indicating whether the user is permitted to access the resource, based on one or more permission responses received. For example, the non-transitory computer-readable storage medium is implemented according to at least Figure 1, Figure 2A, Figure 2B, Figure 3, Figure 4, Figure 5A, and/or Figure 5B.

In some embodiments, the operation further comprise: generating an access explanation of the permission information indicating whether the user is permitted to access the resource based on the one or more permission responses received; and causing presenting a representation of the access explanation. In certain embodiments, the access explanation includes a first explanation indicating a first component of the one or more components is accessible and a second explanation indicating a second component of the one or more components is not accessible. In some embodiments, the first explanation includes an indication of access being permitted by at least one selected from a group consisting of a role-based access control, an attribute-based access control, and a classification-based access control. In some embodiments, the second explanation includes an indication of access being denied by at least one selected from a group consisting of a role-based access control, an attribute-based access control, and a classification-based access control. In certain embodiments, the checking request further includes a requester identifier of a requester, wherein the operation further comprise: checking whether the requester is permitted to access the resource; in response to the requester not being permitted to access the resource, denying the checking request.

In some embodiments, the checking request further includes a requester identifier of a requester; wherein the operation further comprise checking whether the requester is permitted to access the resource; wherein the generating an access explanation of whether the user is permitted to access the resource includes: in response to the requester being permitted to access a part of the resource, generating the access explanation based on the one or more permission responses received and the part of the resource that the requester is permitted to access. In certain embodiments, the one or more components include a first component and a second component, wherein the second component is different from the first component. In some embodiments, the first component is associated with a first object and the second component is associated with a second object being different from the first object. In certain embodiments, the first component is governed by a first access control type and the second component is governed by a second access control type, wherein the second access control type is different from the first access control type. In some embodiments, the first component is associated with a first action type and the second component is associated with a second action type, wherein the second action type is different from the first action type.

For example, some or all components referenced by various embodiments of the present disclosure each are, individually and/or in combination with at least another component, implemented using one or more software components, one or more hardware components, and/or one or more combinations of software and hardware components. In another example, some or all components referenced by various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components referenced by the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for checking data access, the method comprising:
receiving (105) a checking request about a user, the checking request including a user identifier of the user and a resource indication of a resource;
determining (115) one or more components referenced by the resource;
for each component of the one or more components referenced by the resource,
generating (125) a component inquiry for accessing a respective component by the user, the component inquiry including information related to the respective component and the user identifier;
sending (130) the component inquiry to a software service corresponding to the respective component; and
receiving (135) a permission response from the software service, the permission response indicating whether the user is permitted to access the respective component; and
determining (140) permission information indicating whether the user is permitted to access the resource, based on one or more permission responses received;
wherein the method is performed by one or more processors.

2. The method of claim 1, further comprising:
generating an access explanation of the permission information indicating whether the user is permitted to access the resource based on the one or more permission responses received; and
causing presenting a representation of the access explanation.

3. The method of claim 2, wherein the access explanation includes a first explanation indicating a first component of the one or more components is accessible and a second explanation indicating a second component of the one or more components is not accessible.

4. The method of claim 3, wherein the first explanation includes an indication of access being permitted by at least one selected from a group consisting of a role-based access control, an attribute-based access control, and a classification-based access control.

5. The method of claim 3 or claim 4, wherein the second explanation includes an indication of access being denied by at least one selected from a group consisting of a role-based access control, an attribute-based access control, and a classification-based access control.

6. The method of any preceding claim, wherein the checking request further includes a requester identifier of a requester, wherein the method further comprises:
checking whether the requester is permitted to access the resource;
in response to the requester not being permitted to access the resource, denying the checking request.

7. The method of any of claims 1 to 5, wherein the checking request further includes a requester identifier of a requester;
wherein the method further comprises checking whether the requester is permitted to access the resource;
wherein the generating an access explanation of whether the user is permitted to access the resource includes:
in response to the requester being permitted to access a part of the resource, generating the access explanation based on the one or more permission responses received and the part of the resource that the requester is permitted to access.

8. The method of any preceding claim, wherein the one or more components include a first component and a second component, wherein the second component is different from the first component.

9. The method of claim 8, wherein the first component is associated with a first object and the second component is associated with a second object being different from the first object.

10. The method of claim 8, wherein the first component is governed by a first access control type and the second component is governed by a second access control type, wherein the second access control type is different from the first access control type.

11. The method of claim 10, wherein the first component is associated with a first action type and the second component is associated with a second action type, wherein the second action type is different from the first action type.

12. A system for checking data access, the system comprising:
one or more memories comprising instructions stored thereon; and
one or more processors configured to execute the instructions and perform operations in accordance with the method of any preceding claim.

13. A non-transitory computer-readable storage medium having instructions for managing data access that, when executed by one or more processors, cause the one or more processors to perform operations in accordance with the method of claims 1 to 11.
